# EUROPEAN PATENT APPLICATION

(11) **EP 1 995 131 A2**
(43) Date of publication of application: **26.11.2008**
(21) Application number: 08009357.8
(22) Date of filing: 21.05.2008
(51) Int. Cl.: B60S 3/00

(54) **Horizontal drying system for automatic vehicle washing system, automatic vehicle washing system in which said drying system is installed and horizontal vehicle drying method**

(30) Priority: 23.05.2007 IT MI20071041
(71) Applicant: Ceccato, S.p.A., 36041 Alte Ceccato di Montecchio Maggiore (IT)
(72) Inventor: De Silvio, Marcelo, 36100 Vicenza (IT)
(74) Representative: Rapisardi, Mariacristina

(57) **Abstract**

The horizontal drying system for an automatic vehicle washing system of the type comprising at least one first fan adapted to supply at least a first jet of air, has means for moving it along a trajectory represented by an oval cone in the direction transverse to the vehicle.

## Description

The present invention refers to a horizontal drying system for automatic vehicle washing system, an automatic vehicle washing system in which said drying system is installed and a method for horizontal drying of vehicles in said system.

There will be an ever-growing demand for systems of maximum reliability and easy maintenance as well as greater performances in the car washing market. Obviously, this includes the use of self-service systems, thus implying the unpredictability of the type of vehicles and the behaviour of the users.

It is quite obvious that reliability is inversely proportional to the complexity. Usually the enhancement of performance unfortunately tends to increase said complexity hence reducing the reliability. It is well known that a horizontal drying system with the copying of the profile concentrates the larger share of complexity in the washing systems. At the same time, it is the most critical element in terms of safety of the washed vehicles and the reliability of the system itself. Over time, this criticality has been justified with the increase of the functionalities of such system. Currently, the horizontal drying nozzle is used to perform the softener supply, high pressure pre-washing and the vehicle profile memorisation functions. In any case, the criticality degree has remained unvaried.

The obvious alternative to the horizontal drying system with the copying function is that of drying by using jets of air, of suitable pressure and flow rate, at a fixed height.

Therefore, the technical task at the basis of the present invention is that of providing a horizontal drying system for an automatic vehicle washing system, an automatic vehicle washing system in which said drying system is installed and a horizontal vehicle drying method in said system capable of eliminating the technical drawbacks observed in the known art.

Within this technical task, one objective of the invention is that of providing a system and method for horizontal drying in an automatic vehicle washing system capable allowing the enhancement of performances maintaining the reliability or simplify the technology used to obtain the same functions or the same quality of results.

Another objective of the present invention is that of providing a horizontal drying system for an automatic vehicle washing system, an automatic vehicle washing system in which said drying system is installed and a method for horizontal drying of vehicles in said system, which are simple but of high efficiency and with an increased number of functions.

The technical task, as well as this and other objectives according to the present invention, are attained by providing a horizontal drying system for an automatic vehicle washing system, an automatic vehicle washing system in which said drying system is installed and a method for horizontal drying of vehicles in said system according to the independent claims provided hereinafter.

Furthermore, other characteristics and advantages are defined in the dependent claims.

Further characteristics and advantages of the invention shall be clearer from the description of a preferred but not exclusive embodiment of the invention illustrated for exemplifying and non-limiting purposes in the attached drawings wherein:

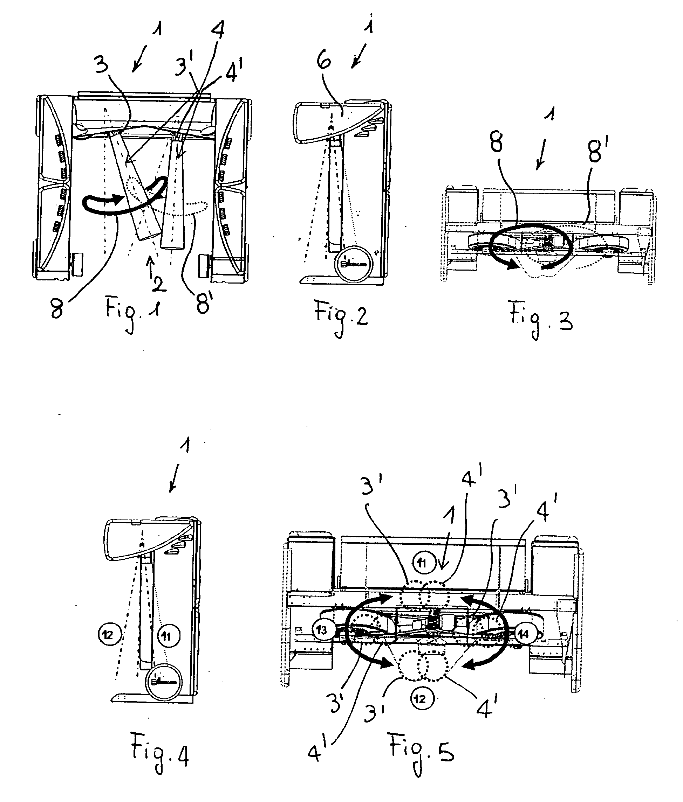

Figures 1, 2 and 3 respectively represent a front, side and top plan view or a moveable rollover of an automatic vehicle washing system with a moveable rollover according to the present invention illustrated in which is the trajectory performable with an elliptical and synchronous oscillating movement by the two round air jet fans;
Figures 4 and 5 respectively show a side and top plan view of the rollover of figures 1-3 indicating the central idle position forward, the central idle position backwards and the position inclined towards the opposite side of the rollover for the two round air jet fans;
Figure 6 shows a side view of the moveable rollover of the preceding figures illustrated both at the initial position of an operation cycle in which the fans of the drying system oscillate forward and at the final position of an operation cycle in which the fans of the drying system oscillate backwards;
Figure 7 shows a top plan view of the representation of figure 6;
Figures 8 and 9 show a front view of the rollover of the preceding figures, provided with a treatment liquid supply system at two operating positions;
Figure 10 shows a side view of the moveable rollover of the preceding figures illustrated both at the initial position of an operation cycle in which the nozzles of the treatment liquid supplying system oscillate forward and at the final position of an operation cycle in which the nozzles of the treatment liquid supply system oscillate backwards;
Figures 11 and 12 respectively show the movement means in the configuration respectively corresponding to the forward and backwards inclination of the fans of the drying system. Referring the abovementioned figures, shown is an automatic washing system generally indicated with reference 1.

The system 1 is of the moveable rollover type but the same concepts provided hereinafter are equally applicable on the tunnel type of vehicle washing system.

The system 1 has a horizontal drying system 2 of the type comprising at least a first fan 3 adapted to supply at least a first jet of air 3'.

In particular, the drying system 2 also has a second fan 4 adapted to supply at least a second jet of air 4'.

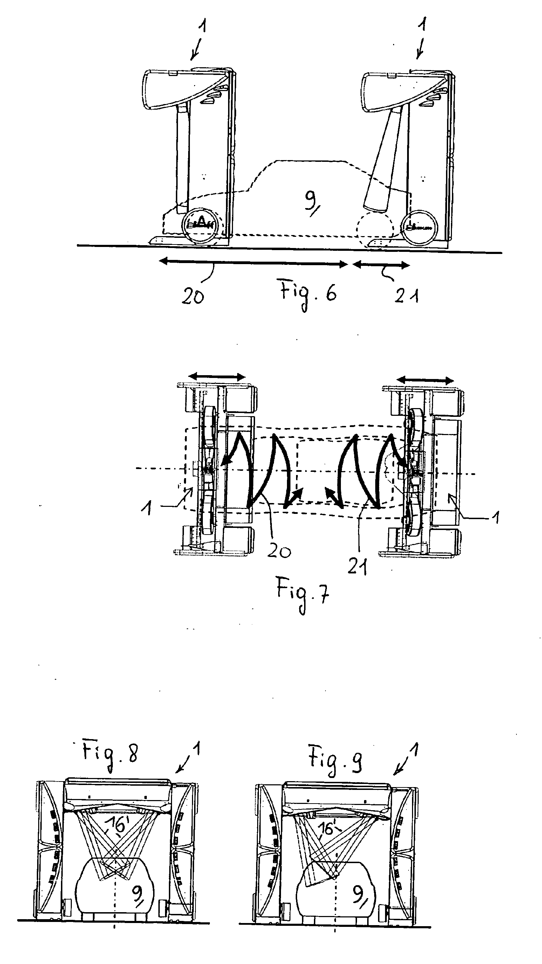

The second fan 4 is arranged in a manner symmetric to the first fan 3 with respect to the vertical central axis of the rollover. The system 1 is also provided with a supply system 5 having at least rotating directional nozzle 16 for supplying a treatment liquid, in particular but not necessarily pre-washing water. Preferably, the supply system 5 has a sets of nozzles 16 arranged in a symmetric manner like the fans 3 and 4. The jets of water supplied by the nozzles 16 are indicated in figures 8, 9 and 10 with 16'.

Furthermore, the horizontal drying system 2 is provided with a platform 6 which bears it.

Preferably and advantageously, also the treatment supply system 5 is mounted on the same platform 6.

Furthermore, the system 1 is provided with means 7 for moving of the horizontal drying system 2 along a trajectory represented by an oval cone in a direction transverse to the vehicle 9.

Advantageously, the movement means 7 are adapted to move, with an analogous trajectory, the horizontal drying system 2 and the treatment liquid supply system 5.

In detail, the movement means 7 comprise a gear motor 10 which controls a double eccentric 15 for conferring to the platform 6 an oscillation transverse to the vehicle 9 combined with a phase lag of 90° at an oscillation longitudinal to the vehicle 9 in such a manner to determine the abovementioned trajectory. The adjustments provided for by the control unit allow to modify the width of the elliptic trajectory according to both the axis and the inclination angle of the fans 3 and 4 with respect to the vertical.

For a drying operation which should be maintained at the height of the passage of the system 1, the work distances might normally vary between 50 cm and 2 metres. For this reason, the fans 3 and 4 are of the round outlet type which maintains the efficiency even from long distances.

As a matter of fact, such a proficient movement of this round jet of air covers a wider surface with respect to the natural diameter.

The relation between surface, velocity and power available determined, for this application, the preferential use of two 3 KW symmetric fans 3 and 4.

The greater efficiency obtained through a simpler mechanism was attained by means of a synchronous movement of the first and second fan 3 and 4 respectively in which the corresponding jets of air 3' and 4' respectively describe an analogous trajectory 8 and 8' respectively: cyclically, the air jets supplied by the first and second fan 3 and 4 move from a vertical adjacent to the sides of the rollover (position 13 of the fan 3 and position 14 of the fan 4) at an inclination angle facing the opposite side of the rollover (position 14 of the fan 3 and position 13 of the fan 4), passing through a central position forward (position 11 of the fans 3 and 4) and a central position backwards (position 12 of the fans 3 and 4); both the fans 3 and 4 rotate in the same direction and they are offset by 180°.

Therefore, the movement provides for that the jets of air 3' and 4' tend to remain together throughout the of spatial rotating. The system includes two sensors for determining the central idle position forward and backwards 11 and 12.

An important characteristic of this simple mechanism lies, as observed, in the possibility to mount other devices such as the treating liquid supply system 5 on the same oscillation platform 6 of the fans 3 and 4.

The method for drying vehicles is as follows.

The system is at the idle position 11. In order to perform a drying cycle, the fans 3, 4 start from the idle position 11 and begin oscillating forward (according to line 20 in figure 6 and 7) but without reaching positions 13 or 14. Before the end of the vehicle, the system rotates until it reaches the idle position 12 thenceforth continues oscillating backwards (line 21 in figures 6 and 7) up to the end. During the return pass, it repeats the same pattern but in the opposite direction.

It should be observed that the first and the second fan 3 and 4 do not necessarily perform the elliptic trajectory entirely but, on the contrary, they preferably perform it partially.

The amplitude of the oscillations around the idle position 11 or 12 is preferably correlated to the position of the fans 3 and 4 with respect to the vehicle 9.

Generally, the central transverse section of a vehicle is maximum while its transverse section at the front and rear is minimum, thus the oscillations of the fans 3 and 4 shall be larger when the central transverse section is beneath the rollover and smaller when a transverse section of an end of the vehicle 9 is beneath the rollover.

Furthermore, it is preferable that the amplitude of the oscillations be inversely proportional to the distance of the fans 3 and 4 from the vehicle 9.

In any case, adjusting the velocity of oscillation and the velocity of the rollover to obtain the maximum drying quality in the least cycle time is of paramount importance.

The supply system 5 can operate at high pressure.

In practice, mounted on the platform 6 are groups of high efficiency rotating directional nozzles 16. The surface covered by the total of jets of water combined with the oscillating movement as well as the angle of inclination allow to perform a highly efficient high pressure pre-washing operation.

The pre-washing cycle is practically identical to the drying operation, given that the velocity ratios can be changed to optimise the performance.

The supply system 5 can also operate at a medium pressure.

In practice pre-washing at a medium pressure serves to perform an intense rinsing after the action of the softening products. This can be obtained by means of a set of directional nozzles 16 with a fixed angle of inclination (5° or 10°) which spray the water from above.

In order to improve the effect at the front and rear parts of the vehicle, said set is installed on the first body of the oscillating structure in such a manner to exploit the possibility of inclining the jets forward and backwards at the idle positions 11 and 12.

Also in this case a correlation between the amplitude of the oscillation of the nozzles 16 and the position of the vehicle beneath the rollover and an inversely proportional relation between the amplitude of the oscillation of the nozzles 16 and their distance from the vehicle is provided.

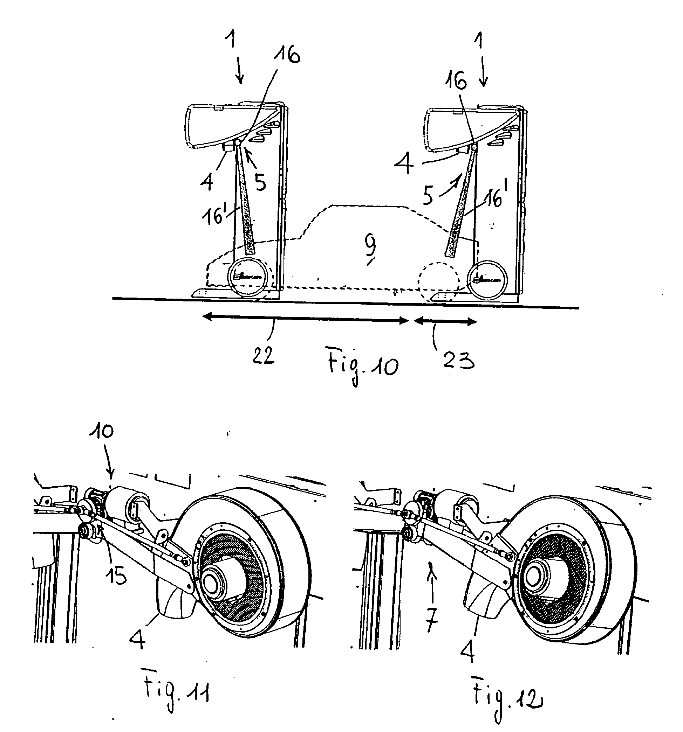

In figure 10, the forward oscillation of the nozzles 16 is indicated by line 22 while their oscillation backwards is indicated by line 23.

The drying system provided by the present invention is simple, inexpensive as well as obviously reliable and safe. This system offers high quality performances for horizontal drying and it allows adding other devices on its oscillating platform to meet the high and medium pressure carwash requirements fully.

The drying system, the system in which it is installed and the drying method thus described are susceptible to various modifications and variants all falling within the scope of protection of the present invention.

In addition, all details can be replaced by technically equivalent elements.

## Claims

1. Horizontal drying system for an automatic vehicle washing system of the type comprising at least one first fan adapted to supply at least a first jet of air, **characterised in that** it comprises means for moving it along a trajectory represented by an oval cone in the direction transverse to the vehicle.

2. Automatic vehicle washing system **characterised in that** it comprises a horizontal drying system according to claim 1.

3. Automatic vehicle washing system comprising a horizontal drying system having at least a first fan and treatment liquid supplying system having at least one rotating directional nozzle, **characterised in that** it comprises means for moving said drying system and said treatment liquid supply system with an analogous trajectory.

4. Automatic washing system according to the preceding claim, **characterised in that** said trajectory is represented by an oval cone in the direction transverse to the vehicle.

5. Automatic washing system according to one or more of the preceding claims, **characterised in that** said treatment liquid is pre-washing water.

6. Automatic washing system according to one or more of the preceding claims, **characterised in that** said movement means comprise a gear motor which controls a double eccentric to confer to a platform installed on which are said drying system and said treatment liquid supply system an oscillation transverse to the vehicle combined with a phase lag of 90° at an oscillation longitudinal to the vehicle.

7. Automatic washing system according to one or more of the preceding claims, **characterised in that** said at least one first fan has a round outlet.

8. Automatic washing system according to one or more of the preceding claims, **characterised in that** said drying system has a first and a second symmetric fans which can be operated along said trajectory in the same direction and with a constant phase difference of 180°.

9. Automatic washing system according to one or more of the preceding claims, **characterised in that** said movement means operate said at least one first fan around an idle position along said trajectory and with an oscillation of amplitude correlated to its position with respect to the vehicle.

10. Automatic washing system according to one or more of the preceding claims, **characterised in that** said movement means operate said at least first fan around an idle position along said trajectory and with an oscillation of amplitude inversely proportional to its distance from the vehicle.

11. Automatic washing system according to one or more of the preceding claims, **c**haracterised in that said movement means operate said at least one nozzle around an idle point along said trajectory and with an oscillation of amplitude correlated to the position of the vehicle with respect to said treatment liquid supply system.

12. Automatic washing system according to one or more of the preceding claims, **characterised in that** said movement means operate said at least one nozzle around an idle point along said trajectory with an oscillation of amplitude inversely proportional to its distance from the vehicle.

13. Washing system according to one or more of the preceding claims **characterised in** being of the tunnel or single or double rollover type.

14. Method Horizontal drying of a vehicle in an automatic vehicle washing system of the type comprising at least a first fan adapted to supply at least a first jet of air, **characterised by** moving in an oscillating manner said at least one first fan around an idle position of a trajectory represented by an oval cone in a direction transverse to the vehicle, with an amplitude of oscillation of said oscillating movement correlated to the position of said first fan with respect to the vehicle.

15. Automatic vehicle washing system as described and claimed.
